(19) Europäisches Patentamt / European Patent Office / Office européen des brevets

(11) **EP 4 773 563 A1**

(12) **EUROPEAN PATENT APPLICATION**
published in accordance with Art. 153(4) EPC

(43) Date of publication:
**08.07.2026  Bulletin 2026/28**

(21) Application number: **24878517.2**

(22) Date of filing: **14.06.2024**

(51) International Patent Classification (IPC):
**H04L 27/26** (2006.01)

(52) Cooperative Patent Classification (CPC):
**H04L 27/26**

(86) International application number:
**PCT/CN2024/099361**

(87) International publication number:
**WO 2025/081864 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **17.10.2023  CN 202311348366**

(71) Applicant: **ZTE CORPORATION**
**Shenzhen, Guangdong 518057 (CN)**

(72) Inventors:
• **XIA, Shuqiang**
  **Shenzhen, Guangdong 518057 (CN)**
• **WANG, Zhongbin**
  **Shenzhen, Guangdong 518057 (CN)**
• **MA, Yihua**
  **Shenzhen, Guangdong 518057 (CN)**
• **WANG, Yuxin**
  **Shenzhen, Guangdong 518057 (CN)**
• **HU, Liujun**
  **Shenzhen, Guangdong 518057 (CN)**
• **YU, Guanghui**
  **Shenzhen, Guangdong 518057 (CN)**

(74) Representative: **Brunazzi, Stefano**
**Jacobacci & Partners S.p.A.**
**Via Senato, 8**
**20121 Milano (IT)**

(54) **ORTHOGONAL FREQUENCY-DIVISION MULTIPLEXING SIGNAL PROCESSING METHOD AND APPARATUS**

(57)     Provided in the embodiments of the present disclosure are a method and an apparatus for processing an orthogonal frequency-division multiplexing (OFDM) signal. The method includes: selecting a portion of subcarriers from subcarriers of an OFDM signal as reserved subcarriers; and reducing a peak to average power ratio (PAPR) and integrated sidelobe level (ISL) of the OFDM signal by setting a first time-domain sequence corresponding to the OFDM signal and a power of each modulation symbol of the reserved subcarriers.

Select a portion of subcarriers from subcarriers of an OFDM signal as reserved subcarriers — S202

Reduce a peak to average power ratio (PAPR) and an integrated sidelobe level (ISL) of the OFDM signal by setting a first time-domain sequence corresponding to the OFDM signal and a power of each modulation symbol of the reserved subcarriers — S204

FIG. 2

EP 4 773 563 A1

## Description

### Cross-Reference to Related Application

The present disclosure claims priority to Chinese Patent Application No. CN202311348366.3 filed on October 17, 2023 and entitled "Orthogonal Frequency-Division Multiplexing Signal Processing Method and Apparatus", the disclosure of which is hereby incorporated by reference in its entirety.

### Technical Field

Embodiments of the present disclosure relate to the technical field of communications, and in particular, to a method and an apparatus for processing an orthogonal frequency-division multiplexing (OFDM) signal.

### Background

Due to differences in the design of communication and sensing waveforms, when designing a waveform for integrated sensing and communication, an OFDM signal is typically used as a communication waveform, and a sensing waveform is transmitted by means of time-division/frequency-division. However, this method has problems of inefficient utilization of sensing resources and is unable to achieve real integrated sensing and communication. Therefore, if the OFDM signal is used as the waveform for integrated sensing and communication, the problem of high Peak to Average Power Ratio (PAPR) and high Integrated Sidelobe Level (ISL) of the OFDM signal needs to be solved, so as to enable the OFDM signal to have a low PAPR and ISL.

### Summary

Embodiments of the present disclosure provide a method and apparatus for processing an OFDM signal, so as to at least solve the problems in the related art that a PAPR and ISL of an OFDM signal need to be reduced when the OFDM signal is used as a waveform for integrated sensing and communication.

According to an embodiment of the present disclosure, a method for processing an OFDM signal is provided and includes: selecting a portion of subcarriers from subcarriers of an OFDM signal as reserved subcarriers; and reducing a peak to average power ratio (PAPR) and an integrated sidelobe level (ISL) of the OFDM signal by setting a first time-domain sequence corresponding to the OFDM signal and a power of each modulation symbol of the reserved subcarriers.

According to another embodiment of the present disclosure, an apparatus for processing an OFDM signal provided and includes: a selection module, configured to select a portion of subcarriers from subcarriers of an OFDM signal as reserved subcarriers; and a setting module, configured to reduce a PAPR and ISL of the OFDM signal by setting a first time-domain sequence corresponding to the OFDM signal and a power of each modulation symbol of the reserved subcarriers.

According to yet another embodiment of the present disclosure, a computer-readable storage medium is further provided. The computer-readable storage medium stores a computer program therein. The computer program is configured to, when being executed, implement steps in any one of the above method embodiments.

According to yet another embodiment of the present disclosure, an electronic device is further provided and includes a memory and a processor. The memory stores a computer program therein. The processor is configured to run the computer program to execute steps in any one of the above method embodiments.

### Brief Description of the Drawings

FIG. 1 is a block diagram of a hardware structure of a computer terminal for implementing a method for processing an OFDM signal according to an embodiment of the present disclosure;
FIG. 2 is a flowchart of a method for processing an OFDM signal according to an embodiment of the present disclosure;
FIG. 3 is a structural block diagram of an apparatus for processing an OFDM signal according to an embodiment of the present disclosure;
FIG. 4 is a flowchart of a method for reducing a PAPR and an ISL through equal power allocation iteration according to an embodiment of the present disclosure; and
FIG. 5 is a flowchart of a method for reducing PAPR and ISL through full iteration according to an embodiment of the present disclosure.

### Detailed Description of the Embodiments

The embodiments of the present disclosure will be described below in detail with reference to the drawings and the embodiments.

It is to be noted that, terms "first", "second" and the like in the description, claims and figures of the present disclosure are used for distinguishing similar objects rather than describing a specific sequence or a precedence order.

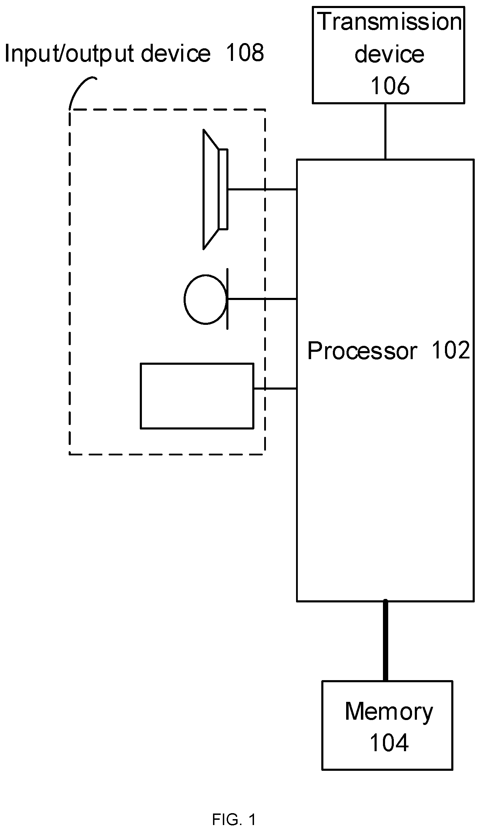

The method embodiments provided in the embodiments of the present application may be executed in a network device (e.g., a base station), a terminal device (e.g., a mobile terminal or a computer terminal), or a similar computing apparatus. In an example in which the method is implemented on the computer terminal, FIG. 1 is a block diagram of a hardware structure of a computer terminal for implementing a method for processing an OFDM signal according to an embodiment of the present disclosure. As shown in FIG. 1, the computer terminal may include one or more (only one processor is shown in FIG. 1) processors 102 (the processor 102 may include, but is not limited to, a processing apparatus such as a microprocessor (MCU) or a programmable logic device (FPGA)) and a memory 104 configured to store data. The computer terminal may further include a transmission device 106 configured to achieve a communication function, and an input/output device 108. Those skilled in the art may understand that the structure shown in FIG. 1 is only schematic, which does not limit the structure of the above computer terminal. For example, the computer terminal may further include more or less components than that shown in FIG. 1, or have a different configuration from that shown in FIG. 1.

The memory 104 may be configured to store a computer program, for example, a software program and a module of application software, such as a computer program corresponding to a method for processing an OFDM signal in the embodiments of the present disclosure. The processor 102 executes the computer program stored in the memory 104, so as to execute various functional applications and data processing, that is, to realize the above method. The memory 104 may include a high-speed random access memory, and may further include a non-volatile memory, such as one or more magnetic disk memory devices, a flash memory device, or other non-volatile solid-state memory devices. In some examples, the memory 104 may further include memories remotely disposed relative to the processor 102. The remote memories may be connected with the computer terminal via a network. Examples of the network include, but are not limited to, the Internet, an intranet, a local area network, a mobile communication network, and a combination thereof.

The transmission device 106 is configured to receive or send data via the network. The specific example of the network may include a wireless network provided by a communication provider of the computer terminal. In an example, the transmission device 106 includes a Network Interface Controller (NIC), and may be connected with other network devices by using a base station, so as to communicate with the Internet. In an example, the transmission device 106 may be a Radio Frequency (RF) module, which is configured to communicate with the Internet in a wireless manner.

In a system of integrated sensing and communication, two service functions including data transmission and target sensing may be achieved by using same resources such as time, frequency, power, etc. thus they have gained increasing attention within the industry. In terms of signal characteristics, an OFDM waveform is widely used in a 4G/5G mobile communication system due to its significant advantages in spectral efficiency, interference suppression, and excellent compatibility with the Multiple-Input Multiple-Output (MIMO) technology. Furthermore, since an ambiguity function of an OFDM signal shows a single-peak shape and has excellent distance resolution characteristics, making it well-suited for performing a wireless sensing task. Based on the above two reasons, in the design of a waveform for integrated sensing and communication, OFDM is usually used as a main modulation manner.

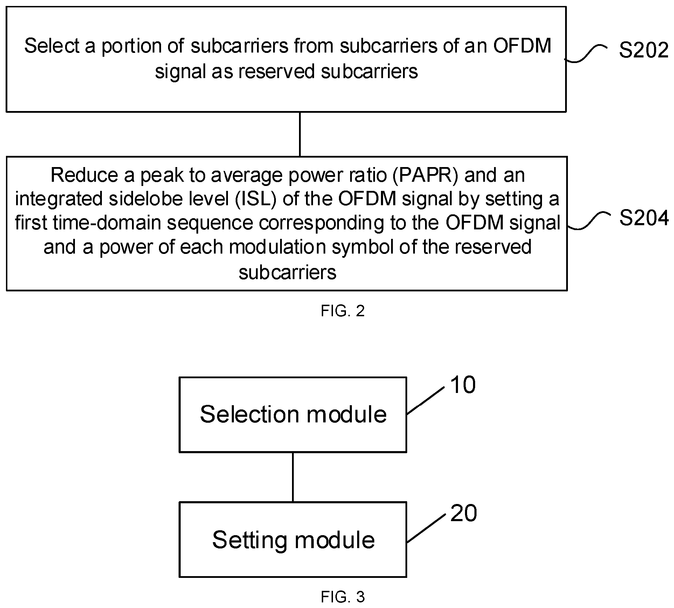

This embodiment provides a method for processing an OFDM signal that is executable on the above computer terminal. FIG. 2 is a flowchart of a method for processing an OFDM signal according to an embodiment of the present disclosure. As shown in FIG. 2, the method includes following steps.

At S202: select a portion of subcarriers from subcarriers of an OFDM signal as reserved subcarriers.

In an embodiment, there are multiple mechanisms for selecting the reserved subcarriers, and different selection mechanisms may affect the effect of reducing a PAPR of an OFDM symbol. The selection mechanisms include one of the following: selecting a corresponding number of subcarriers from the subcarriers of the OFDM signal at equal intervals as the reserved subcarriers, according to a preset number of the reserved subcarriers; selecting a corresponding number of consecutive subcarriers from the subcarriers of the OFDM signal as the reserved subcarriers, according to the number of the reserved subcarriers; selecting a corresponding number of subcarriers randomly from the subcarriers of the OFDM signal as the reserved subcarriers, according to the number of the reserved subcarriers.

In this embodiment, in addition to the reserved subcarriers, the remaining subcarriers in the OFDM signal are communication subcarriers, and modulation symbols on the communication subcarriers are known and remain unchanged. In a case where the power allocated to the reserved subcarriers needs to be determined, the power allocated to the communication subcarriers may be determined first, and then the power allocated to the communication subcarriers is subtracted from the total power of the modulation symbols of the OFDM signal, such that the power allocated to the reserved subcarriers may be obtained.

After S202 of this embodiment, the method further includes: determining an index matrix corresponding to the reserved subcarriers according to the reserved subcarriers. The index matrix is configured to position a modulation symbol sequence corresponding to the reserved subcarriers from a modulation symbol sequence of the OFDM, where the modulation symbol sequence is a frequency-domain sequence. Only one element in each row of the index matrix is 1 (a sequence of a corresponding column is an index of the subcarrier), and all other elements are 0.

At S204: reduce a PAPR and ISL of the OFDM signal by setting a first time-domain sequence corresponding to the OFDM signal and a power of each modulation symbol of the reserved subcarriers.

The PAPR indicates a ratio of a peak power to an average power of the OFDM signal, and may represent a coverage range of the OFDM signal; and the ISL indicates autocorrelation characteristics of the OFDM signal.

There are differences when reducing the PAPR of the OFDM signal and reducing the ISL of the OFDM signal. That is, the PAPR of the OFDM signal may be reduced by causing the first time-domain sequence corresponding to the OFDM signal to tend to a constant modulus, and the ISL of the OFDM signal may be reduced by causing the power of the modulation symbols of the reserved subcarriers to be the constant modulus or tend to the constant modulus.

In an embodiment, the method includes: performing multiple iterations on the first time-domain sequence through a preset algorithm, based on the first time-domain sequence and the index matrix corresponding to the reserved subcarriers, such that the first time-domain sequence tends to a constant modulus after multiple iterations; and the power of each modulation symbol of the reserved subcarriers is set as a constant modulus, so as to reduce the PAPR and ISL of the OFDM signal. Or, performing multiple iterations on the first time-domain sequence and the power of each modulation symbol of the reserved subcarriers through a preset algorithm, based on the first time-domain sequence and the index matrix corresponding to the reserved subcarriers, such that the first time-domain sequence and the power of each modulation symbol of the reserved subcarriers tend to a constant modulus, so as to reduce the PAPR and ISL of the OFDM signal.

In an embodiment, the performing multiple iterations on the first time-domain sequence through the preset algorithm includes: determining a first power sequence according to the first time-domain sequence; and determining a second frequency-domain sequence through the preset algorithm and a transform relationship between time domain and frequency domain based on the first time-domain sequence, the first power sequence, the index matrix, the number of the reserved subcarriers, and the total power of the modulation symbols of the reserved subcarriers, where the second frequency-domain sequence is a frequency-domain sequence corresponding to the reserved subcarriers during each iteration process; determining a third frequency-domain sequence corresponding to the OFDM signal, based on the second frequency-domain sequence and a modulation symbol sequence of a communication subcarrier of the OFDM signal, and stopping the multiple iterations in a case where the third frequency-domain sequence meets an iteration stopping condition.

In an embodiment, performing multiple iterations on the first time-domain sequence and the power of each modulation symbol of the reserved subcarriers through the preset algorithm includes: determining a first power sequence according to the first time-domain sequence; determining a fourth frequency-domain sequence based on the first time-domain sequence, the first power sequence, the index matrix, and a transform relationship between time domain and frequency domain; determining a fifth frequency-domain sequence corresponding to the OFDM signal based on the fourth frequency-domain sequence and a modulation symbol sequence of a communication subcarrier of the OFDM signal, and determining a second power sequence according to the fifth frequency-domain sequence; determining a sixth frequency-domain sequence based on the fifth frequency-domain sequence, the second power sequence, the index matrix, and the transform relationship between time domain and frequency domain; determining a seventh frequency-domain sequence corresponding to the OFDM signal based on the sixth frequency-domain sequence and the modulation symbol sequence of the communication subcarrier of the OFDM signal, and stopping the multiple iterations in a case where the seventh frequency-domain sequence meets an iteration stopping condition.

In S204 of this embodiment, before performing multiple iterations on the first time-domain sequence through the preset algorithm, the method further includes: performing transform between time domain and frequency domain on a first frequency-domain sequence corresponding to the OFDM signal to obtain the first time-domain sequence.

In an embodiment, the iteration stopping condition includes one of the following: the current number of iterations reaches a preset iteration number; a modulus of a difference between first frequency-domain sequences of two adjacent iterations is less than a preset threshold.

Through the above steps, the portion of the subcarriers are reserved from the subcarriers of the OFDM signal, and the first time-domain sequence corresponding to the OFDM signal and the power of each modulation symbol of the reserved subcarriers are set, such that the PAPR and ISL of the OFDM signal may be reduced. Therefore, it may be possible to solve the problems in the related art that the PAPR and ISL of the OFDM signal need to be reduced when the OFDM signal is used as a waveform for integrated sensing and communication, thereby improving the sensing ability of a system for integrated sensing and communication.

From the description of the above embodiments, those skilled in the art may clearly know that the method according to the foregoing embodiments may be implemented in a manner of combining software and a necessary universal hardware platform, and of course, the method may also be implemented through hardware, but the former is a preferred implementation mode under many circumstances. Based on such an understanding, the technical solutions of the present disclosure substantially or parts making contributions to the prior art may be embodied in form of software product, and the computer software product is stored in a storage medium (for example, a ROM/RAM, a magnetic disk and an optical disk), including a plurality of instructions configured to enable a network device (e.g., a base station or a server) or a terminal device (e.g., a mobile terminal or a computer terminal) to execute the method in each embodiment of the present disclosure.

This embodiment further provides an apparatus for processing an OFDM signal. The apparatus is configured to implement the foregoing embodiments and the preferred implementation, and what has been described will not be described again. As used below, the term "module" may be a combination of software and/or hardware that implements a predetermined function. Although the apparatus described in the following embodiments is preferably implemented in software, but implementation in hardware, or in a combination of software and hardware, are also possible and may be conceived.

FIG. 3 is a structural block diagram of an apparatus for processing an OFDM signal according to an embodiment of the present disclosure. As shown in FIG. 3, the apparatus includes a selection module 10 and a setting module 20.

The selection module 10 is configured to select a portion of subcarriers from subcarriers of an OFDM signal as reserved subcarriers.

The setting module 20 is configured to reduce a PAPR and ISL of the OFDM signal by setting a first time-domain sequence corresponding to the OFDM signal and a power of each modulation symbol of the reserved subcarriers.

It is to be noted that each of the above modules may be implemented by software or hardware. For the hardware, it may be implemented in the following manners, but is not limited to the following: the above modules are all located in a same processor; or the above modules are located in different processors in any combination.

For ease of understanding of the technical solutions provided in the present disclosure, detailed explanations will be described with reference to the embodiments of specific scenarios.

The technology of integrated sensing and communication is one of the key technologies of the next-generation mobile communication system, and can simultaneously realize two functions of communication and sensing by multiplexing the same spectrum resources and hardware resources. As the OFDM signal is used as one of the waveforms commonly used for communication, through the special design, the signal may become a candidate waveform of the system for integrated sensing and communication. If an existing OFDM signal is applied to the system for integrated sensing and communication, there are problems of a high PAPR and a high ISL, which may not facilitate sensing. The ISL measures autocorrelation characteristics of the OFDM signal; and the PAPR indicates a ratio of a peak power to an average power of the OFDM signal, and can represent a coverage range of the OFDM signal.

For the OFDM signal, by reserving a portion of subcarriers/power, the PAPR may be reduced, and the ISL of the OFDM signal may also be reduced, but there are differences in reducing the PAPR and the ISL. With regard to reducing the PAPR of the OFDM signal, a sequence $x^{(k)}$ after k iterations may be caused to tend to a constant modulus, where $x^{(k)}$ is a time-domain sequence of the OFDM signal after k iterations. With regard to reducing the ISL of the OFDM signal, the power of the reserved subcarriers after k iterations may be caused to tend to the constant modulus.

An embodiment of the present disclosure provides a solution of simultaneously reducing both the PAPR and ISL of the OFDM signal. In the solution, assuming that there are N subcarriers in an OFDM system, a frequency-domain sequence corresponding to a modulation symbol on a subcarrier m is X(m), where m = 1, 2, ..., N. A corresponding time-domain sequence is x(n), where n = 1, 2, ..., N, and

$$\sum_{n=1}^{N}|x(n)|^2 = \sum_{m=1}^{N}|X(m)|^2 = 1 .$$

The subcarriers of the OFDM system are classified into two categories: communication subcarriers and reserved subcarriers. The number of the communication subcarriers is $N_1$, a corresponding index matrix is A and has a size of $N_1*N$, and modulation symbols on the communication subcarriers are known and remain unchanged. The number of the reserved subcarriers is $N_2$, a corresponding index matrix is B and has a size of $N_2*N$, and only one element in each row of the matrix A and the matrix B is 1 (a sequence of a corresponding column is an index of the subcarrier), all other elements are 0.

In the embodiments of the present disclosure, the selection of the reserved subcarriers may affect the effect of reducing the PAPR and ISL of the OFDM signal. The manner of selecting the reserved subcarriers includes one of the following.

Equal interval selection: selecting a corresponding number of subcarriers from the subcarriers of the OFDM signal at an equal interval as the reserved subcarriers, according to a preset number of reserved subcarriers.

Continuous selection: selecting continuously a corresponding number of subcarriers from the subcarriers of the OFDM signal as the reserved subcarriers, according to the preset number of reserved subcarriers.

Random selection: selecting a corresponding number of subcarriers randomly from the subcarriers of the OFDM signal as the reserved subcarriers, according to the preset number of reserved subcarriers.

In an embodiment, after the reserved subcarriers are selected, a corresponding index matrix B is further determined according to the determined reserved subcarriers.

Furthermore, for the time-domain sequence x(n), where n = 1, 2,..., N, it is also assumed that a corresponding column vector is $x^{(0)}$; and assuming that F is a normalized Fourier transform matrix, a time-frequency domain relationship corresponding to the OFDM signal of the k-th iteration may achieve mutual transform between a frequency domain and a time domain by using the Fourier transform matrix.

Based on the above assumption, the solution of simultaneously reducing the PAPR and ISL of the OFDM signal provided in the embodiment of the present disclosure includes the following two manners.

    I. The modulation symbols on the reserved subcarriers are rationally designed through the frequency domain, so as to cause the OFDM signal to have a low PAPR and ISL.

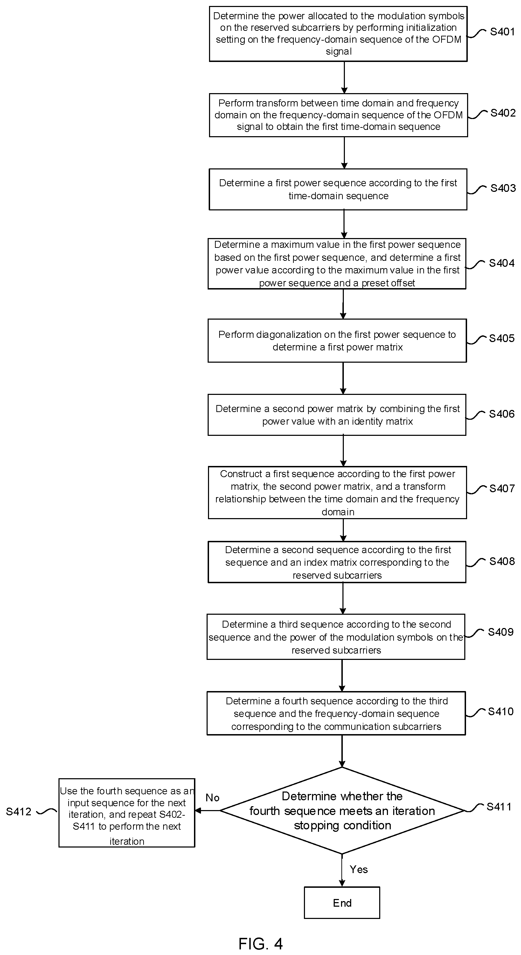

FIG. 4 is a flowchart of a method for reducing a PAPR and an ISL through equal power allocation iteration according to an embodiment of the present disclosure. As shown in FIG. 4, the method includes the following steps.

At S401: determine the power allocated to the modulation symbols on the reserved subcarriers by performing initialization setting on the frequency-domain sequence of the OFDM signal.

For example, for the power allocated to the modulation symbols on the communication subcarriers and reserved subcarriers in the sequence, assuming that the total power is 1, the power allocated to the modulation symbols on the communication subcarriers is a, and the power allocated to the modulation symbols on the reserved subcarriers is b, then $b = \sqrt{1 - a^2}$, a = $\|XC\|_2$, where $XC$ is a frequency-domain sequence of the communication subcarriers, which may be determined when the OFDM signal is initialized; and an initialized value $X^{(0)}$ of the frequency-domain sequence of the OFDM signal is determined, the modulation symbols corresponding to the reserved subcarriers in $X^{(0)}$ are set to 0, and in this case, the corresponding sequence is $XC$. The frequency-domain sequence of the OFDM signal is equivalent to the first frequency-domain sequence in the above embodiments.

At S402: Perform transform between time domain and frequency domain on the frequency-domain sequence of the OFDM signal to obtain the first time-domain sequence $X^{(k)}$.
where $x^{(k)} = F^H X^{(k)}$.

As described above, with regard to reducing the PAPR of the OFDM signal, the time-domain sequence $x^{(k)}$ of the OFDM signal needs to tend to a constant modulus. Since an initial input in this embodiment is the frequency-domain sequence, the input frequency-domain sequence in S402 needs to be transformed to a time domain to obtain the time-domain sequence $x^{(k)}$, and then multiple iterations are performed on the time-domain sequence $x^{(k)}$ through a preset algorithm, so as to cause the time-domain sequence to tend to the constant modulus.

At S403: determine a first power sequence $p_t^{(k)}$ according to the first time-domain sequence,

**where** $p_t^{(k)} = \left| x^{(k)} \right|^2$. The PAPR is a ratio of a peak power to an average power of the OFDM signal. Therefore, after $x^{(k)}$ is determined in S402, $p_t^{(k)}$ needs to be further determined according to $x^{(k)}$.

At S404: determine a maximum value in the first power sequence based on the first power sequence, and determine a first power value $p_{t,max}^{(k)}$ according to the maximum value and a preset offset of the first power sequence.

Where $p_{t,max}^{(k)} = max\left( p_t^{(k)} \right) + offset0$, *offset*0 is the preset offset; the first power value $p_{t,max}^{(k)}$ is a peak value of the power of the OFDM signal in the current iteration; and *max* () is a maximum function and configured to obtain a maximum element in the first power sequence $p_t^{(k)}$.

At S405: determine a first power matrix $L_t^{(k)}$ by performing diagonalization on the first power sequence,

where $L_t^{(k)} = diag\left( p_t^{(k)} \right)$, and the *diag* () function is configured to perform diagonalization on $p_t^{(k)}$.

At S406: determine a second power matrix $M_t^{(k)}$ by combining the first power value with an identity matrix.

where $M_t^{(k)} = p_{t,max}^{(k)} I_N$, and $I_N$ indicates the identity matrix of N*N.

At S407: construct a first sequence $Y^{(k)}$ according to the first power matrix, the second power matrix, and a transform relationship between the time domain and the frequency domain.

where $Y^{(k)} = F(M_t^{(k)} - L_t^{(k)})F^H X^{(k)}$.

The PAPR indicates a ratio (i.e., peak-to-average ratio) of a peak power to an average power of the OFDM signal. In this embodiment, a difference between a power peak of the OFDM signal and a power value of each time-domain symbol of the OFDM signal may be reduced through multiple iterations, thereby achieving the effect of reducing the ratio of the peak power to the average power of the OFDM signal.

At S408: determine a second sequence $Y_b^{(k)}$ according to the first sequence and the index matrix corresponding to the reserved subcarriers,

where $Y_b^{(k)} = B^T B Y^{(k)}$, and $Y_b^{(k)}$ is the modulation symbol on the reserved subcarrier selected from $Y^{(k)}$.

The first sequence in S407 is a frequency-domain sequence of the OFDM signal after the PAPR is reduced. The ISL also needs to be reduced, that is, the power of the modulation symbols of the reserved subcarriers also needs to be set. Therefore, S408 is to select a portion corresponding to the reserved subcarriers from the first sequence through the index matrix.

At S409: determine a third sequence $Z^{(k)}(n)$ according to the second sequence and the power of the modulation symbols on the reserved subcarriers.

where $Z^{(k)}(n) = \begin{cases} \frac{b}{\sqrt{N_2}} e^{j \, arg\{Y_b^{(k)}(n)\}} \\ 0, Y_b^{(k)}(n) = 0 \end{cases}$ , and b is the total power of all modulation symbols on the reserved subcarriers, and the third sequence is equivalent to the second frequency-domain sequence in the above embodiments.

In this embodiment, with regard to reducing the ISL, the ISL is reduced by setting the power of the modulation symbols of the reserved subcarriers as the constant modulus, that is, the power of the modulation symbols of the reserved subcarriers is enabled to be $\frac{b}{\sqrt{N_2}}$ , and $N_2$ is the number of the reserved subcarriers.

At S410: determine a fourth sequence $X^{(k+1)}$ according to the third sequence and the frequency-domain sequence corresponding to the communication subcarriers,

where $X^{(k+1)} = Z^{(k)} + XC$, and $Z^{(k)}$ is the frequency-domain sequence of the reserved subcarriers after the PAPR and the ISL are reduced, $XC$ is the frequency-domain sequence corresponding to the communication subcarriers, and $X^{(k+1)}$ is the frequency-domain sequence of the OFDM signal after the PAPR and the ISL are reduced. The fourth sequence is the corresponding frequency-domain sequence obtained after the first time-domain sequence is subjected to k iterations of the algorithm in this embodiment, and the frequency-domain sequence is equivalent to the third frequency-domain sequence in the above embodiments.

At S411: determine whether the fourth sequence meets an iteration stopping condition, and if the fourth sequence does not meet the iteration stopping condition, continue to perform S412.

The iteration stopping condition includes the following.

The current number of iterations reaches a preset iteration number.

A modulus value of a difference value between the fourth sequences of two adjacent iterations is less than a preset threshold. For example, determine whether the modulus value of the difference value between the fourth sequences obtained at the k-th iteration and the (k+1)-th iteration is less than a preset threshold, and if the modulus value is less than the preset threshold, the iteration is stopped; otherwise, the iteration continues.

At S412: use the fourth sequence as an input sequence for the next iteration, and repeat S402-S411 to perform the next iteration, until the iteration stopping condition is met.

II. Design the modulation symbols on the reserved subcarriers by means of iterations, so as to cause the OFDM signal to have a low PAPR and ISL.

In the method, signals on the reserved subcarriers are enabled to tend to a constant modulus by means of iterations. The method includes the following steps.

At S501: determine the power allocated to the modulation symbols on the reserved subcarriers by performing initialization setting on the frequency-domain sequence of the OFDM signal.

At S502: perform transform between time domain and frequency domain on the frequency-domain sequence of the OFDM signal to obtain the first time-domain sequence $x^{(k)}$.

At S503: determine a first power sequence $p_t^{(k)}$ according to the first time-domain sequence.

At S504: determine a maximum value in the first power sequence based on the first power sequence, and determine a first power value $p_{t,max}^{(k)}$ according to the maximum value and a preset offset in the first power sequence.

At S505: perform diagonalization on the first power sequence to determine a first power matrix $L_t^{(k)}$ .

At S506: determine a second power matrix $M_t^{(k)}$ by combining the first power value with an identity matrix.

At S507: construct a first sequence $Y^{(k)}$ according to the first power matrix, the second power matrix, and a transform relationship between the time domain and the frequency domain.

At S508: determine a second sequence $Y_b^{(k)}$ according to the first sequence and the index matrix corresponding to the reserved subcarriers.

S501-S508 in this embodiment are the same as S401-S408 in above embodiments. Therefore, formulas for determining parameters in each step may refer to the above embodiments, and will not be described in this embodiment.

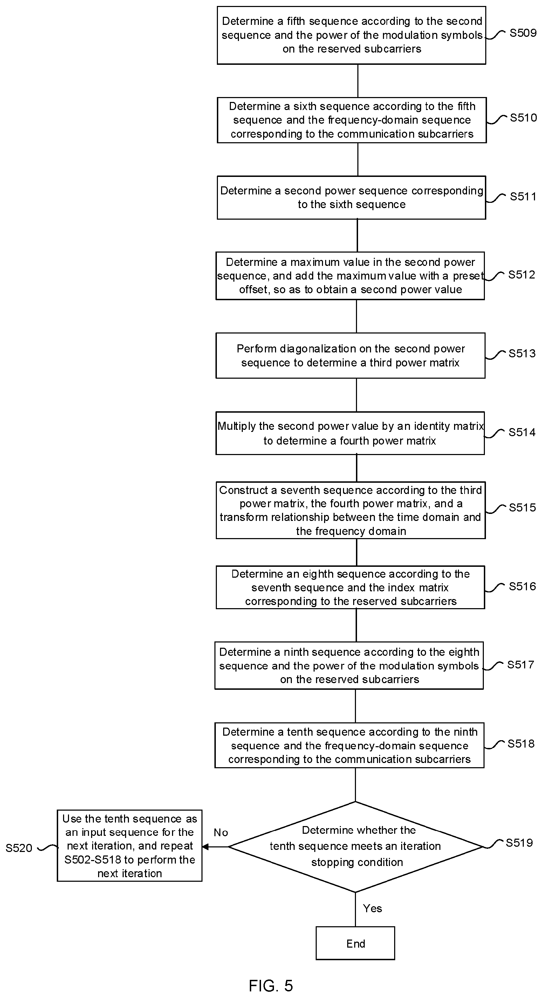

In this embodiment, in each iteration, the PAPR of the OFDM signal is reduced first on the time domain (i.e., S501-S508), and then the ISL of the OFDM signal is reduced on the frequency domain. Therefore, in addition to S501-S508, as shown in FIG. 5, this embodiment further includes the following steps.

At S509: determine a fifth sequence $Z'^{(k)}$ according to the second sequence $Y_b^{(k)}$ and the power of the modulation symbols on the reserved subcarriers,

where $Z'^{(k)} = \frac{b Y_b^{(k)}}{\left\| Y_b^{(k)} \right\|}$ , and b is the total power of all modulation symbols on the reserved subcarriers.

In this embodiment, by performing multiple iterations on $\frac{b}{\|Y_b^{(k)}\|}$ through a preset algorithm, so as to cause $\frac{b}{\|Y_b^{(k)}\|}$ to tend to a constant modulus, that is, the power of the modulation symbols of the reserved subcarriers tends to the constant modulus. The fifth sequence is equivalent to the fourth frequency-domain sequence in the above embodiments.

At S510: determine a sixth sequence $X'^{(k)}$ according to the fifth sequence and the frequency-domain sequence corresponding to the communication subcarriers,

where $X'^{(k)} = Z'^{(k)} + XC$. The sixth sequence is equivalent to the fifth frequency-domain sequence in the above embodiments.

At S511: determine a second power sequence $p_f^{(k)}$ corresponding to the sixth sequence, where

$$p_f^{(k)} = \left|X'^{(k)}\right|^{\wedge 2}.$$

At S512: determine a maximum value in the second power sequence and add the maximum value with a preset offset, so as to obtain a second power value $p_{f,max}^{(k)}$,

where $p_{f,max}^{(k)} = \max\left(p_f^{(k)}\right) + offset1$, and offset1 is the preset offset; and *max* () is a function of maximum value and configured to obtain a maximum element in the second power sequence $p_f^{(k)}$.

At S513: perform diagonalization on the second power sequence, and determine a third power matrix $L_f^{(k)}$ for subsequent iteration,

where $L_f^{(k)} = diag(p_f^{(k)})$, and the function *diag* () is configured to perform diagonalization on the second power sequence $p_f^{(k)}$.

At S514: multiply the second power value by an identity matrix to determine a fourth power matrix $M_f^{(k)}$,

where $M_f^{(k)} = p_{f,max}^{(k)}I_N$, and $I_N$ indicates the identity matrix of N*N.

**At S515:** construct a seventh sequence $Y'^{(k)}$ according to the third power matrix, the fourth power matrix, and a transform relationship between the time domain and the frequency domain,

where $Y'^{(k)} = (M_f^{(k)} - L_f^{(k)})X'^{(k)}$.

At S516: determine an eighth sequence $Y'^{(k)}_b$ according to the seventh sequence and the index matrix corresponding to the reserved subcarriers.

That is, the modulation symbols on the reserved subcarriers are selected from the seventh sequence,

where $Y'^{(k)}_b = B^T B Y'^{(k)}$.

At S517: determine a ninth sequence $Z'^{(k)}$ according to the eighth sequence and the power of the modulation symbols on the reserved subcarriers,

where $Z'^{(k)} = \frac{bY'^{(k)}_b}{\left\|Y'^{(k)}_b\right\|}$, and b is the total power of all modulation symbols on the reserved subcarriers, and the ninth sequence is equivalent to the sixth frequency-domain sequence in the above embodiments.

At S518: determine a tenth sequence $X''^{(k+1)}$ according to the ninth sequence and the frequency-domain sequence corresponding to the communication subcarriers,

where $X''^{(k+1)} = Z'^{(k)} + XC$. The tenth sequence is the corresponding frequency-domain sequence after the first time-domain sequence is subjected to k iterations of the algorithm in this embodiment, and the frequency-domain sequence is equivalent to the seventh frequency-domain sequence in the above embodiments.

At S519: determine whether the tenth sequence meets an iteration stopping condition, and if the tenth sequence does not meet the iteration stopping condition, continue to perform S520.

The iteration stopping condition includes the following.

The current number of iterations reaches a preset iteration number.

A modulus value of a difference value between the tenth sequences of the two adjacent iterations is less than a preset threshold. For example, determine whether the modulus value of the difference value between the tenth sequences obtained at the k-th iteration and the (k+1)-th iteration is less than the preset threshold, and if the modulus value is less than the preset threshold, stop the iteration; otherwise, continue the iteration.

At S520: use the tenth sequence as an input sequence for the next iteration, and repeat S502-S518 to perform the next iteration, until the iteration stopping condition is met.

Through the mechanism of simultaneously reducing the PAPR and ISL of the OFDM signal provided in the above embodiments, the subcarriers of the OFDM symbol are classified into two types, which are the communication subcarriers and the reserved subcarriers. Moreover, in a case where the modulation symbols on the communication subcarriers are known and remain unchanged, the PAPR and ISL of the OFDM signal may be reduced by setting the modulation symbols and the power on the reserved subcarriers. The setting solution includes a solution of achieving reduction through equal power allocation iteration and a solution of achieving reduction through full iteration.

An embodiment of the present disclosure further provides a computer-readable storage medium. The computer-readable storage medium stores a computer program therein. Steps in any one of the above method embodiments are executed when the computer program is configured to be operated.

In an exemplary embodiment, the computer-readable storage medium may include, but is not limited to, a USB flash disk, a Read-Only Memory (ROM), a Random Access Memory (RAM), a mobile hard disk, a magnetic disk, an optical disk and various media that can store computer programs.

An embodiment of the present disclosure further provides an electronic device. The electronic device includes a memory and a processor. The memory is configured to store a computer program therein. The processor is configured to execute the computer program to execute steps in any one of method embodiments described above.

In an exemplary embodiment, the electronic device may further include a transmission device and an input/output device. The transmission device is connected with the processor. The input/output device is connected with the processor.

Specific examples in this embodiment may refer to the examples described in the foregoing embodiments and the exemplary implementations, and will not be repeated in this embodiment.

It is apparent that those skilled in the art should understand that the above mentioned modules or steps of the present disclosure may be implemented by a general computing device, and may also be integrated on a single computing device or distributed in a network composed of multiple computing devices. The above mentioned modules or steps of the present application may be implemented with program codes executable by the computing device, so that they may be stored in a storage device for execution by the computing device, and in some cases, the steps shown or described may be performed in a different sequence than described herein, or can be fabricated into individual integrated circuit modules respectively, or multiple modules or steps thereof are fabricated into a single integrated circuit module for implementation. In this way, the present disclosure are not limited to any specific combination of hardware and software.

The above are only the preferred embodiments of the present disclosure and are not intended to limit the present disclosure. For those skilled in the art, the present disclosure may have various modifications and variations. Any modifications, equivalent replacements, improvements and the like made within the principle of the disclosure shall fall within the scope of protection of the present disclosure.

**Claims**

1. A method for processing an Orthogonal Frequency-Division Multiplexing (OFDM) signal, comprising:

   selecting a portion of subcarriers from subcarriers of an OFDM signal as reserved subcarriers; and
   reducing a peak to average power ratio (PAPR) and an integrated sidelobe level (ISL) of the OFDM signal by setting a first time-domain sequence corresponding to the OFDM signal and a power of each modulation symbol of the reserved subcarriers.

2. The method according to claim 1, wherein the setting a first time-domain sequence corresponding to the OFDM signal and a power of each modulation symbol of the reserved subcarriers comprises:
   performing multiple iterations on the first time-domain sequence through a preset algorithm, based on the first time-domain sequence and an index matrix corresponding to the reserved subcarriers, such that the first time-domain sequence tends to a constant modulus after the multiple iterations; and setting the power of each modulation symbol of the reserved subcarriers as a constant modulus, so as to reduce the PAPR and ISL of the OFDM signal.

3. The method according to claim 1, wherein the setting a first time-domain sequence corresponding to the OFDM signal and a power of each modulation symbol of the reserved subcarriers comprises:
   performing multiple iterations on the first time-domain sequence and the power of each modulation symbol of the reserved subcarriers through a preset algorithm, based on the first time-domain sequence and an index matrix corresponding to the reserved subcarriers, such that the first time-domain sequence and the power of each modulation symbol of the reserved subcarriers tend to a constant modulus after the multiple iterations, so as to reduce the PAPR and ISL of the OFDM signal.

4. The method according to claim 1, wherein the selecting a portion of subcarriers from subcarriers of an OFDM signal as reserved subcarriers comprises one of the following:

   selecting, according to a preset number of the reserved subcarriers, the number of subcarriers from the subcarriers of the OFDM signal at equal intervals as the reserved subcarriers;
   selecting a corresponding number of consecutive subcarriers from the subcarriers of the OFDM signal as the reserved subcarriers, according to the number of the reserved subcarriers; and

selecting a corresponding number of subcarriers randomly from the subcarriers of the OFDM signal as the reserved subcarriers, according to the number of the reserved subcarriers.

5. The method according to claim 1, wherein after selecting the portion of subcarriers as the reserved subcarriers, the method further comprises: determining, according to the reserved subcarriers, an index matrix corresponding to the reserved subcarriers.

6. The method according to claim 2 or 3, wherein before performing the multiple iterations on the first time-domain sequence through the preset algorithm, the method further comprises: performing transform between time domain and frequency domain on a first frequency-domain sequence corresponding to the OFDM signal to obtain the first time-domain sequence.

7. The method according to claim 2, wherein the performing multiple iterations on the first time-domain sequence through a preset algorithm comprises:

   determining a first power sequence according to the first time-domain sequence;
   determining a second frequency-domain sequence through the preset algorithm and a transform relationship between time domain and frequency domain, based on the first time-domain sequence, the first power sequence, the index matrix, the number of the reserved subcarriers, and a total power of modulation symbols of the reserved subcarriers, wherein the second frequency-domain sequence is a frequency-domain sequence corresponding to the reserved subcarriers during each iteration; and
   determining a third frequency-domain sequence corresponding to the OFDM signal, based on the second frequency-domain sequence and a modulation symbol sequence of communication subcarriers of the OFDM signal, and stopping the multiple iterations in a case where the third frequency-domain sequence meets an iteration stopping condition.

8. The method according to claim 3, wherein the performing multiple iterations on the first time-domain sequence and the power of each modulation symbol of the reserved subcarriers through a preset algorithm comprises:

   determining a first power sequence according to the first time-domain sequence;
   determining a fourth frequency-domain sequence based on the first time-domain sequence, the first power sequence, the index matrix and a transform relationship between time domain and frequency domain;
determining a fifth frequency-domain sequence corresponding to the OFDM signal, based on the fourth frequency-domain sequence and a modulation symbol sequence of communication subcarriers of the OFDM signal, and determining a second power sequence according to the fifth frequency-domain sequence;
determining a sixth frequency-domain sequence based on the fifth frequency-domain sequence, the second power sequence, the index matrix and the transform relationship between time domain and frequency domain; and
determining a seventh frequency-domain sequence corresponding to the OFDM signal, based on the sixth frequency-domain sequence and the modulation symbol sequence of the communication subcarriers of the OFDM signal, and stopping the multiple iterations in a case where the seventh frequency-domain sequence meets an iteration stopping condition.

9. The method according to claim 7 or 8, wherein the iteration stopping condition comprises one of the following: the current number of iterations reaches a preset iteration number; and a modulus of a difference between first frequency-domain sequences of two adjacent iterations is less than a preset threshold.

10. An apparatus for processing an Orthogonal Frequency-Division Multiplexing (OFDM) signal, comprising:

    a selection module, configured to select a portion of subcarriers from subcarriers of an OFDM signal as reserved subcarriers; and
    a setting module, configured to reduce a peak to average power ratio (PAPR) and an integrated sidelobe level (ISL) of the OFDM signal by setting a first time-domain sequence corresponding to the OFDM signal and a power of each modulation symbol of the reserved subcarriers.

11. A computer-readable storage medium, storing a computer program therein, wherein the computer program, when executed by a processor, implements steps of the method according to any one of claims 1 to 9.

12. An electronic device, comprising a memory, a processor, and a computer program that is stored in the memory and executable by the processor, wherein the processor, when executing the computer program, implements steps of the method according to any one of claims 1 to 9.

Input/output device 108

Transmission device 106

Processor 102

Memory 104

FIG. 1

Select a portion of subcarriers from subcarriers of an OFDM signal as reserved subcarriers — S202

Reduce a peak to average power ratio (PAPR) and an integrated sidelobe level (ISL) of the OFDM signal by setting a first time-domain sequence corresponding to the OFDM signal and a power of each modulation symbol of the reserved subcarriers — S204

FIG. 2

Selection module — 10

Setting module — 20

FIG. 3

Determine the power allocated to the modulation symbols on the reserved subcarriers by performing initialization setting on the frequency-domain sequence of the OFDM signal — S401

Perform transform between time domain and frequency domain on the frequency-domain sequence of the OFDM signal to obtain the first time-domain sequence — S402

Determine a first power sequence according to the first time-domain sequence — S403

Determine a maximum value in the first power sequence based on the first power sequence, and determine a first power value according to the maximum value in the first power sequence and a preset offset — S404

Perform diagonalization on the first power sequence to determine a first power matrix — S405

Determine a second power matrix by combining the first power value with an identity matrix — S406

Construct a first sequence according to the first power matrix, the second power matrix, and a transform relationship between the time domain and the frequency domain — S407

Determine a second sequence according to the first sequence and an index matrix corresponding to the reserved subcarriers — S408

Determine a third sequence according to the second sequence and the power of the modulation symbols on the reserved subcarriers — S409

Determine a fourth sequence according to the third sequence and the frequency-domain sequence corresponding to the communication subcarriers — S410

Use the fourth sequence as an input sequence for the next iteration, and repeat S402-S411 to perform the next iteration — S412

No ← Determine whether the fourth sequence meets an iteration stopping condition — S411

Yes

End

FIG. 4

Determine a fifth sequence according to the second sequence and the power of the modulation symbols on the reserved subcarriers — S509

Determine a sixth sequence according to the fifth sequence and the frequency-domain sequence corresponding to the communication subcarriers — S510

Determine a second power sequence corresponding to the sixth sequence — S511

Determine a maximum value in the second power sequence, and add the maximum value with a preset offset, so as to obtain a second power value — S512

Perform diagonalization on the second power sequence to determine a third power matrix — S513

Multiply the second power value by an identity matrix to determine a fourth power matrix — S514

Construct a seventh sequence according to the third power matrix, the fourth power matrix, and a transform relationship between the time domain and the frequency domain — S515

Determine an eighth sequence according to the seventh sequence and the index matrix corresponding to the reserved subcarriers — S516

Determine a ninth sequence according to the eighth sequence and the power of the modulation symbols on the reserved subcarriers — S517

Determine a tenth sequence according to the ninth sequence and the frequency-domain sequence corresponding to the communication subcarriers — S518

Use the tenth sequence as an input sequence for the next iteration, and repeat S502-S518 to perform the next iteration — S520

No ← Determine whether the tenth sequence meets an iteration stopping condition — S519

Yes

End

FIG. 5

## INTERNATIONAL SEARCH REPORT

| International application No. |
| --- |
| **PCT/CN2024/099361** |

**A. CLASSIFICATION OF SUBJECT MATTER**

H04L 27/26(2006.01)i

According to International Patent Classification (IPC) or to both national classification and IPC

**B. FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, ENTXT, ENTXTC, DWPI: OFDM, 调制, 符号, 迭代, 峰, 均, 比, 功率, 恒模, 旁瓣, 时域, 序列, 载波, 子载波, isl, PAPR, 矩阵, 索引, 模, modulat+, iterat+, symbol, peak, average, power, ratio, sidelobe, level, matrix, carrier wave

**C. DOCUMENTS CONSIDERED TO BE RELEVANT**

| Category* | Citation of document, with indication, where appropriate, of the relevant passages | Relevant to claim No. |
| --- | --- | --- |
| X | CN 114124637 A (JIANGSU UNIVERSITY OF SCIENCE AND TECHNOLOGY) 01 March 2022 (2022-03-01) description, paragraphs [0002]-[0138] | 1, 4, 5, 10-12 |
| A | CN 109714773 A (UNIVERSITY OF ELECTRONIC SCIENCE AND TECHNOLOGY OF CHINA) 03 May 2019 (2019-05-03) entire document | 1-12 |
| A | CN 110166087 A (SOUTHEAST UNIVERSITY) 23 August 2019 (2019-08-23) entire document | 1-12 |
| A | US 2022038238 A1 (HUAWEI TECHNOLOGIES CO., LTD.) 03 February 2022 (2022-02-03) entire document | 1-12 |
| A | US 2021336828 A1 (SPECTRAL DSP CORP.) 28 October 2021 (2021-10-28) entire document | 1-12 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 August 2024** | **19 August 2024** |

| Name and mailing address of the ISA/CN | Authorized officer |
| --- | --- |
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/099361**

| Patent document cited in search report | | | Publication date (day/month/year) | Patent family member(s) | | | Publication date (day/month/year) |
|---|---|---|---|---|---|---|---|
| CN | 114124637 | A | 01 March 2022 | None | | | |
| CN | 109714773 | A | 03 May 2019 | None | | | |
| CN | 110166087 | A | 23 August 2019 | None | | | |
| US | 2022038238 | A1 | 03 February 2022 | WO | 2020216068 | A1 | 29 October 2020 |
| | | | | EP | 3952190 | A1 | 09 February 2022 |
| | | | | CN | 111865517 | A | 30 October 2020 |
| US | 2021336828 | A1 | 28 October 2021 | EP | 4140110 | A1 | 01 March 2023 |
| | | | | US | 2023275796 | A1 | 31 August 2023 |
| | | | | WO | 2021216760 | A1 | 28 October 2021 |
| | | | | IN | 202247065984 | A | 25 November 2022 |
| | | | | US | 2023275796 | A1 | 31 August 2023 |

Form PCT/ISA/210 (patent family annex) (July 2022)

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202311348366